# EUROPEAN PATENT APPLICATION

(11) **EP 3 657 134 A1**
(43) Date of publication of application: **27.05.2020**
(21) Application number: 18382835.9
(22) Date of filing: 21.11.2018
(51) Int. Cl.: G01D 5/244, G01D 11/30, G01D 5/347

(54) **OPTOLECTRONIC MEASURING DEVICE**

(71) Applicant: FAGOR ARRASATE, S.COOP., 20500 ARRASATE - MONDRAGON (ES)
(72) Inventor: ZUNZUNEGI MUGICA, José Javier, 20550 Aretxabaleta (ES)
(74) Representative: Igartua, Ismael

(57) **Abstract**

The invention relates to an optoelectronic measuring device (100) configured for measuring the position of a first object with respect to a second object, one of the objects being movable with respect to the other object in a measuring direction. The optoelectronic measuring device (100) comprises a graduated scale (3), a hollow profile (4) with a main body (4.1) defining an inner cavity and a groove (4.0) arranged in said inner cavity, extending in the measuring direction (A) and being configured for housing the graduated scale (3), a scale fixing device for immobilizing the graduated scale (3) in the hollow profile (4), and a profile fixing device for fixing the hollow profile (4) to one of the objects (1). Both fixing devices are accessible from the same face of the hollow profile (4) to perform the corresponding fixing operation.

## Description

### TECHNICAL FIELD

The present invention relates to optical measuring devices which are configured for measuring the movement between two objects and comprising a hollow profile with a graduated scale arranged inside said hollow profile.

### PRIOR ART

Optoelectronic measuring devices which are suitable for determining the position between two objects comprise a graduated scale, and a read head facing the graduated scale and movable with respect to said graduated scale in a measuring direction parallel to the graduated scale. The read head comprises a light emitter emitting a light beam to illuminate the graduated scale, a detection device receiving the light going through or reflected by the graduated scale, and a controlling determining the position between the graduated scale and the read head depending on the light received by the detection device.

Some of these devices comprise a hollow profile, and the graduated scale is arranged inside said hollow profile. The hollow profile is fixed to one of the objects, whereas the read head is fixed to the other object.

The hollow profile comprises a longitudinal opening, and the read head comprises an active part that is introduced inside the profile and moves longitudinally through said opening. A gasket allowing the connection between the active part of the read head and another part of said head that is located outside the profile is arranged in the opening and closes said opening in a leak-tight manner. Therefore, the inside of the hollow profile is free of any impurity that may access it from the outside, and the determination of the position is carried out in a clean and safe environment.

EP2549240A2 discloses an optoelectronic measuring device of this type, and comprises a hollow profile with a main body defining an inner cavity, and a groove connected to said main body, which is arranged in said inner cavity and is configured for housing the graduated scale. The optoelectronic measuring device further comprises a scale fixing device for fixing the graduated scale to the hollow profile, such that said graduated scale remains stationary with respect to the hollow profile, and a profile fixing device for fixing the hollow profile to the corresponding object, the profile fixing device being accessible in a given fixing direction, which is transverse to the longitudinal direction, to cause said fixing.

### DISCLOSURE OF THE INVENTION

The object of the invention is to provide an optoelectronic measuring device, as defined in the claims.

The optoelectronic measuring device of the invention comprises:
- a graduated scale,
- a hollow profile comprising a main body defining an inner cavity, and a groove arranged in said inner cavity, extending in the measuring direction and being configured for housing the graduated scale,
- a scale fixing device for immobilizing the graduated scale in the hollow profile, at least in the measuring direction, and
- a profile fixing device for fixing the hollow profile to one of the objects.

The scale fixing device and the profile fixing device are accessible from the same face of the hollow profile to perform the corresponding fixing operation.

Therefore, since both fixing devices are accessible from the same face of the hollow profile, in the proposed optoelectronic measuring device a user causes the immobilization of the graduated scale in the hollow profile and the fixing of the hollow profile to the object by accessing the optoelectronic measuring device from the same side. Unlike what occurs in the prior art, in the proposed optoelectronic measuring device this allows both fixing elements to always be accessible in the same manner, preventing circumstances in which one of the fixing elements is accessible while the other is not due to the environment where said optoelectronic measuring device is installed. As a result, installation of the optoelectronic measuring device is made easier, regardless of the mounting conditions.

These and other advantages and features of the invention will become apparent in view of the drawings and detailed description of the invention.

### DESCRIPTION OF THE DRAWINGS

Figure 1 is a perspective view of the preferred embodiment of the optoelectronic measuring device of the invention, with the hollow profile of said device attached to an object.
Figure 2 is a section view of the optoelectronic measuring device of Figure 1.

### DETAILED DISCLOSURE OF THE INVENTION

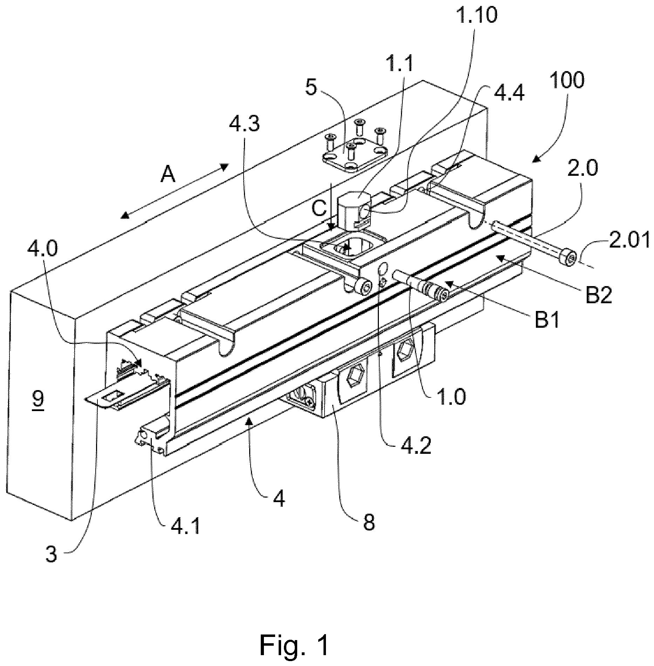

Figure 1 shows an embodiment of the optoelectronic measuring device 100 of the invention which is configured for measuring the relative position of a first object with respect to a second object, one of the objects being movable with respect to the other object in a measuring direction A.

The optoelectronic measuring device 100 comprises a graduated scale 3, a hollow profile 4 with a main body 4.1 defining an inner cavity and a read head 8 movable with respect to the graduated scale 3 in the measuring direction A. The hollow profile 4 comprises a groove 4.0 arranged in said inner cavity, extending in the measuring direction A and being configured for housing the graduated scale 3. The hollow profile 4 preferably comprises a rectangular shape.

The optoelectronic measuring device 100 further comprises a scale fixing device for fixing the graduated scale 3 to the hollow profile 4, particularly for fixing it to the groove 4.0 or for immobilizing it in said groove 4.0, such that said graduated scale 3 remains stationary at least in the measuring direction A, and a profile fixing device for fixing the hollow profile 4 to one of the objects 9. Both fixing devices are accessible from the same face of the hollow profile 4, preferably from a front face 4.8 of said hollow profile 4 opposite a mounting face 4.9, to perform the corresponding fixing operation. For its attachment to the corresponding object 9, the mounting face 4.9 of said hollow profile 4 is arranged facing said object 9 (preferably said mounting face 4.9 is supported on said object 9, as shown in the drawings).

The scale fixing device comprises an elongated element 1.0 with a longitudinal axis 1.01 extending in a scale fixing direction B1, and the profile fixing device comprises a respective elongated element 2.0 with a longitudinal axis 2.01 extending in a scale fixing direction B2. The scale fixing device is configured for performing the fixing of the graduated scale 3 with a longitudinal movement in the scale fixing direction B1 of its elongated element 1.0, and the profile fixing device is configured for performing the fixing of the hollow profile 4 with respect to the corresponding object with a longitudinal movement in the profile fixing direction B2 of its elongated element 1.0. In a preferred embodiment both fixing directions B1 and B2 are parallel, and, in said preferred embodiment, said fixing directions B1 and B2 are transverse to measuring direction A.

The elongated element 2.0 of the profile fixing device may comprise, for example, a screw, which grips and fixes the hollow profile 4 against the corresponding object 9, which is normally a work bench or bedplate of a machine. The elongated element 2.0 is accessible from one face of the hollow profile 4 to perform the corresponding fixing operation, the profile fixing device thereby being accessible from said face to perform said fixing operation. In turn, the hollow profile 4 may comprise a through hole 4.4 which the elongated element 2.0 goes through, said elongated element 2.0 thereby fixing said hollow profile 4 to the corresponding object 9. The through hole 4.4 could also be interpreted as part of the profile fixing device.

The elongated element 1.0 of the scale fixing device may comprise, for example, a screw or the like, which causes the immobilization of the graduated scale 3 with respect to the groove 4.0 of the hollow profile 4, and, therefore, the immobilization of said graduated scale 3 with respect to said hollow profile 4.

The scale fixing device further comprises an additional element 1.1 configured for exerting pressure in an anchoring direction C different from the scale fixing direction B1, whereby the graduated scale 3 arranged in the groove 4.0 of the hollow profile 4 is kept immobilized in said groove 4.0. The elongated element 1.0 is configured for causing the movement of said additional element 1.1 in the anchoring direction C when it is actuated in the scale fixing direction B1. The elongated element 1.0 thereby causes the fixing of the graduated scale 3 to the hollow profile 4, in an indirect manner (without directly acting on the graduated scale 3). Preferably, as occurs in the case of the preferred embodiment, for example, the anchoring direction C is perpendicular to the scale fixing direction B1 and also to the anchoring direction A.

In the preferred embodiment, the scale fixing device is configured so that the additional element 1.1 presses the graduated scale 3 against a support surface of the groove 4.0, not depicted in the drawings and on which the graduated scale 3 is supported, when it exerts pressure in the anchoring direction C, thereby immobilizing said graduated scale 3 in said groove 4.0.

In the preferred embodiment, the hollow profile 4 comprises a first hole 4.2 extending in the scale fixing direction B1 from the face of the hollow profile 4 from which the elongated element 1.0 of the scale fixing device is accessible to perform the corresponding fixing operation, and a second hole 4.3 extending in the anchoring direction C from another one of the faces of the hollow profile 4 and being communicated with the first hole 4.2. The additional element 1.1 of the scale fixing device comprises a hole 1.10, which is communicated with the first hole 4.2 of said hollow profile 4 when the additional element 1.1 is housed in the second hole 4.3. The holes 4.2 and 4.3 could also be interpreted as part of the scale fixing device.

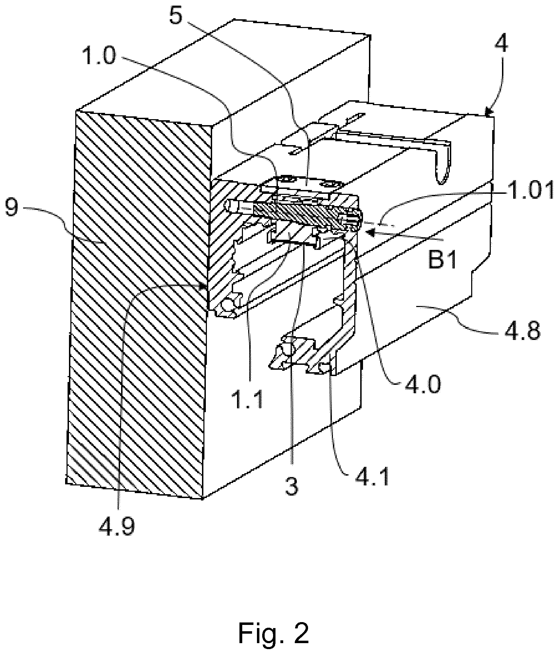

When the scale fixing device is immobilizing the graduated scale 3, a situation which is shown by way of example in Figure 2, the additional element 1.1 is housed in the second hole 4.3 of the hollow profile 4 and the elongated element 1.0 is housed in the first hole 4.2 of the hollow profile 4 and in the hole 1.10 of the additional element 1.1.

In some embodiments, the elongated element 1.0 and the additional element 1.1 are configured such that said elongated element 1.0 acts as a cam and causes the movement of the additional element 1.1 in the anchoring direction C when it is housed in said hole 1.10. In the preferred embodiment, the outer surface of the elongated element 1.0 of the scale fixing device and the surface of the additional element 1.1 demarcating the hole 1.10 are conical, such that as the elongated element 1.0 moves through the hole 1.10, the movement in the anchoring direction C of the additional element 1.1 is caused.

In other embodiments, the center of the hole 1.10 of the additional element 1.1 of the scale fixing device and the center of the first hole 4.2 of the hollow profile 4 are misaligned in the scale fixing direction B1 when the elongated element 1.0 is not housed in said holes 1.10 and 4.2, such that when said elongated element 1.0 is inserted in said holes 1.10 and 4.2, as it is first housed in the first hole 4.2, when it reaches the hole 1.10 it causes the movement of the additional element 1.1 in the anchoring direction C. The center of the hole 1.10 is above the center of the first hole 4.2, with respect to the graduated scale 3.

At least in the preferred embodiment, the optoelectronic measuring device 100 comprises a lid 5 associated with the second hole 4.3 of the hollow profile 4 for closing said second hole 4.3 in a leak-tight manner and thereby preventing being able to introduce any element in the inner cavity of the hollow profile 4 through said second hole 4.3. The lid 5 could also be interpreted as part of the scale fixing device.

Depending on the length of the hollow profile 4, for example, the optoelectronic measuring device 100 may comprise a plurality of profile fixing devices for fixing the hollow profile 4 to the corresponding object 9, and/or a plurality of scale fixing devices for fixing the graduated scale 3 to the hollow profile 4 (for immobilizing it in the groove 4.0 of said hollow profile 4).

## Claims

1. Optoelectronic measuring device configured for measuring the position of a first object with respect to a second object, one of the objects being movable with respect to the other object in a measuring direction (A), the optoelectronic measuring device (100) comprising a graduated scale (3), a hollow profile (4) comprising a main body (4.1) defining an inner cavity, and a groove (4.0) arranged in said inner cavity, the groove (4.0) extending in the measuring direction (A) and said groove (4.0) being configured for housing the graduated scale (3), the optoelectronic measuring device (100) also comprising a scale fixing device for immobilizing the graduated scale (3) in the hollow profile (4), at least in the measuring direction (A), and a profile fixing device for fixing the hollow profile (4) to one of the objects (1), **characterized in that** the scale fixing device and the profile fixing device are accessible from the same face (4.8) of the hollow profile (4) to perform the corresponding fixing operation.

2. Optoelectronic measuring device according to claim 1, wherein the scale fixing device comprises an elongated element (1.0) with a longitudinal axis (1.01) extending in a scale fixing direction (B1), and the profile fixing device comprises a respective elongated element (2.0) with a longitudinal axis (2.01) extending in a scale fixing direction (B2), the scale fixing device being configured for performing the fixing of the graduated scale (3) with a longitudinal movement in the scale fixing direction (B1) of its elongated element (1.0), and the profile fixing device being configured for performing the fixing of the hollow profile (4) with a longitudinal movement in the profile fixing direction (B2) of its elongated element (1.0).

3. Optoelectronic measuring device according to claim 2, wherein the scale fixing direction (B1) and the profile fixing direction (B2) are parallel.

4. Optoelectronic measuring device according to claim 3, wherein the ruler fixing direction (B1) and the profile fixing direction (B2) are directions transverse to the measuring direction (A).

5. Optoelectronic measuring device according to any of claims 2 to 4, wherein the scale fixing device further comprises an additional element (1.1) configured for exerting pressure on the graduated scale (3), in an anchoring direction (C) different from the scale fixing direction (B1), whereby said graduated scale (3) arranged in the groove (4.0) of the hollow profile (4) is kept immobilized in said groove (4.0), the elongated element (1.0) being configured for causing the movement of said additional element (1.1) in the anchoring direction (C) when it is actuated in the scale fixing direction (B1).

6. Optoelectronic measuring device according to claim 5, wherein the hollow profile (4) comprises a first hole (4.2) extending in the scale fixing direction (B1) from the face (4.8) of the hollow profile (4) which is accessible for performing the corresponding fixing operations, and a second hole (4.3) extending in the anchoring direction (C) from another one of the faces of the hollow profile (4) and being communicated with the first hole (4.2), the additional element (1.1) of the scale fixing device being housed in the second hole (4.3) of the hollow profile (4), and said additional element (1.1) comprising a hole (1.10) communicated with the first hole (4.2) of said hollow profile (4).

7. Optoelectronic measuring device according to claim 6, wherein the elongated element (1.0) and the additional element (1.1) of the scale fixing device are configured such that said elongated element (1.0) acts as a cam, and when it is housed in the hole (1.10) of the additional element (1.1) it causes the movement of the additional element (1.1) in the anchoring direction (C).

8. Optoelectronic measuring device according to claim 7, wherein the outer surface of the elongated element (1.0) of the scale fixing device and/or the surface of the additional element (1.1) of said scale fixing device demarcating the hole (1.10) of the additional element (1.1) are conical, such that as the elongated element (1.0) moves through said hole (1.10), the movement in the anchoring direction (C) of the additional element (1.1) is caused.

9. Optoelectronic measuring device according to any of claims 6 to 8, wherein the center of the hole (1.10) of the additional element (1.1) of the scale fixing device and the center of the first hole (4.2) of the hollow profile (4) are misaligned in the scale fixing direction (B1), when the elongated element (1.0) is not arranged in said holes (1.10, 4.2), the center of the hole (1.10) being above the center of the first hole (4.2) with respect to the graduated scale (3).

10. Optoelectronic measuring device according to any of claims 6 to 9, comprising a lid (5) for closing in a leak-tight manner the second hole (4.3) of the hollow profile (4).

11. Optoelectronic measuring device according to any of claims 5 to 10, wherein the scale fixing device is configured so that the additional element (1.1) presses the graduated scale (3) against a surface support of the groove (4.0) when it exerts pressure in the anchoring direction (C), thereby immobilizing said graduated scale (3) in said groove (4.0).

12. Optoelectronic measuring device according to any of claims 1 to 11, wherein the anchoring direction (C) is perpendicular to the scale fixing direction (B1).

13. Optoelectronic measuring device according to any of claims 1 to 12, wherein the hollow profile (4) comprises a mounting face (4.9) configured for being arranged facing the object (9) to which said hollow profile (4) is attached, the scale fixing device and the profile fixing device being accessible from the face (4.8) of said hollow profile (4) opposite said mounting face (4.9).

14. Optoelectronic measuring device according to any of claims 1 to 13, comprising a plurality of scale fixing devices.

15. Optoelectronic measuring device according to any of claims 1 to 14, comprising a plurality of profile fixing devices.
